# EUROPEAN PATENT APPLICATION

(11) **EP 2 879 390 A1**
(43) Date of publication of application: **03.06.2015**
(21) Application number: 14004017.1
(22) Date of filing: 28.11.2014
(51) Int. Cl.: H04N 21/254, H04N 21/266, H04N 21/414, H04N 21/4627

(54) **Method and system of transmitting conditional access authorizations between DVB-S and OTT broadcast transmission media**

(30) Priority: 28.11.2013 TR 201313913
(71) Applicant: KREA ICERIK HIZMETLERI VE PRODUKSIYON ANONIM SIRKETI, Istanbul (TR)
(72) Inventor: Turel, Ugur, 34353 Istanbul (TR)
(74) Representative: Kaya, Erdem

(57) **Abstract**

The present invention is related to a method and system of transmitting conditional access authorizations between media in order for the users to watch live broadcast contents that can be watched via private membership through the satellite by means of set-top devices, in every place they desire.

## Description

### Technical Field

The present invention is related to the method and system of transmitting the conditional access authority between the mediums in order to prevent that the satellite and internet broadcast are open and can be watched at the same time and in several transmission mediums via single membership belonging to the user in the system where the users can watch the live broadcast contents that can be watched via private membership through the satellite by means of set-top devices, in every place they desire and at every time they want.

### State of Art

DVB (Digital Video Broadcasting) is digital television broadcast system that enables the transmission of interactive systems besides television and radio. The broadcasting quality thereof is higher when compared to analogue broadcast, and digital television broadcast can be transmitted to broader areas without mistakes with lower broadcasting power thanks to the modulation and mistake prevention systems used. There are different ways of transmitting the digital video broadcast. The abbreviations such as S-Satellite, T-Terrestrial, C-Cable and H-Handheld show that digital broadcast is transmitted to the user by means of which source and way. The statement "DVB-S" is provided on all of the digital satellite receiver devices. The reason thereof is that it is the source satellite and the signal is transmitted to the receiver by means of air.

Today, television broadcasting goes beyond the traditional broadcasting. As the use of online terminals (smart phones, laptop and tablet computers, and pocket computers) has become widespread thanks to said improvement that is of vital importance in terms of both content providers and user (audience), the broadcast watching habits of the users have also changed.

The services offering video broadcast contents independent of the television through internet to the users (e.g. YouTube) have reached large masses and have become a serious rival for television broadcasting in the process that has started in the past by accessing the video contents only by means of computers, and then continued by watching said video contents received through internet on the television screens that are bigger than the computer screens by connecting the computers to the televisions.

The content providers and television manufacturers have offered many applications in relation to the decreasing interest for the television and television broadcasting and have aimed to attract the attention of the users to the television and television broadcasting again. Therefore, the content providers have conducted studies for increasing the quality of broadcast offered to the users, varying the contents and services and popularizing the use of interactive contents. Thanks to the private membership system for the content providers, many contents can be watched and video on demand (VOD), pay per view (PPV) can be given as examples to said systems and movie channels, soap opera channels and live sports channels can be given as examples to said contents.

Due to said developments, television manufacturers gathered internet and television together in order to change the watching habits of the users, and released smart televisions (Smart TV) that offer functions similar to the computers and can operate several applications developed in order to make the life easier, therein.

After the use of internet has become widespread by means of smart televisions and set-top devices, the video contents have started to be transmitted to the devices with internet connection through IP (Internet Protocol) in the forthcoming days. The system called OTT-TV (Over-the-top TV) means that the end users transmit the video contents to their online devices through internet. Said technology offers the chance of receiving television content by using devices independent of television unit, and computer, mobile phone, tablet computer and even, game console and of watching the video content on demand. Thus, the content providers have offered the right of direct access to the video contents for the end users having the required internet infrastructure and required equipment by skipping the operators, and have increased their incomes.

In the state of art, applications that can communicate with smart televisions and set-top devices have been developed due to the rapid increase in the use of online terminals. Thanks to said application developed in order to eliminate the dissatisfaction of the users in the case that users who have subscribed to the contents that can be watched via private membership, cannot watch the contents on their televisions due to any reasons, it is aimed that the subscribers can reach the contents they desire by means of online terminals independent of the television, whenever they want via single membership.

In the state of art, the main reason for requiring the transmission of the authority for watching live broadcast is the desire for eliminating the informal usages. The subscribers can have access to the contents after logging in by means of user name and a password belonging to the user. In the case that the user name and password of the subscriber are shared with another person, the contents that can be watched live via private membership such as live sports broadcast, will be attempted to be watched by non-subscribers in several different mediums via single membership; therefore, the content providers will experience serious financial losses. Therefore, today, the subscribers can watch the contents requiring private membership such as live sports broadcast, only in the transmission medium (DVB-S, OTT), to which they subscribe. Thus, the aim for offering to the subscribers the chance of watching the desired contents in any place they desire is prevented.

In line with said target, the systems transmitting the live broadcast contents that can be watched via private membership, from DVB-S digital video transmission medium (from satellite) to OTT broadcast transmission mediums (to the online terminals) during live broadcasting have been developed, but the transmission of live broadcast that can be watched via private membership in the OTT broadcast transmission mediums, to the DVB-S digital video broadcast transmission medium has not been encountered. In order to offer said service to the subscribers, a study that is conducted in order perform the blackout process, namely shutting down the broadcast in the medium where live broadcast contents are transmitted, while the live broadcast contents that can be watched via private membership are being transmitted between the broadcast transmission mediums, has not been encountered. Thanks to this study, the users (U) can watch the live broadcast contents that can be watched via private membership, in a single transmission medium via single membership, but whenever and wherever they desire.

In U.S patent document numbered US20070214484**,** broadcast transition method between platforms offering digital terrestrial broadcasting (DVB-T) and digital television broadcasts (DVB-H) in the mobile devices, and the device thereof are disclosed. In the system comprising device manager having a fixed connection with set-top devices and wireless communication with mobile devices, the transmission from a digital video broadcast receiver to the other is performed manually by the user or automatically with the profiles of user options. In said system, the transmission of the authorities for watching the live broadcast contents (encoded broadcast) that can be watched via private membership, providing the live broadcast in a single transmission medium after the transmission and shutting down the broadcasting in the other transmission medium (blackout) are not disclosed.

Finally, the need for a system, which eliminates the abovementioned disadvantages and in which, the users can watch the live broadcast contents that can be watched via private membership, in a single transmission medium via one membership whenever and wherever they desire, and the insufficiencies of the solutions in the state of art have made it compulsory to make an improvement in the related technical field.

### Brief Description of the Invention

The present invention has been developed by being inspired of the present conditions and aims to eliminate the abovementioned drawbacks.

The object of the present invention is to enable the subscribers to watch the live contents via private membership through television by means of set-top devices whenever and wherever they desire (e.g. online terminals) without purchasing another product or service.

The object of the present invention is to stop the satellite broadcast when internet broadcast is opened and to stop the internet broadcast when satellite broadcast is opened in order to prevent that satellite and internet broadcast belonging to single subscription are open and can be watched at the same time.

The object of the present invention is to transmit the authorities of the subscribers for watching the live broadcast contents via private membership such as sports match between digital video broadcast transmission medium (DVB-S) via satellite and over-the-top TV (OTT-TV) broadcast transmission mediums through internet.

The structural and characteristic features and all the advantages of the present invention will be more clearly understood thanks to the figures below and the detailed description written with reference to those figures and thus, the evaluation needs to be done by taking said figures and the detailed description into consideration.

### Figures for Understanding the Present Invention

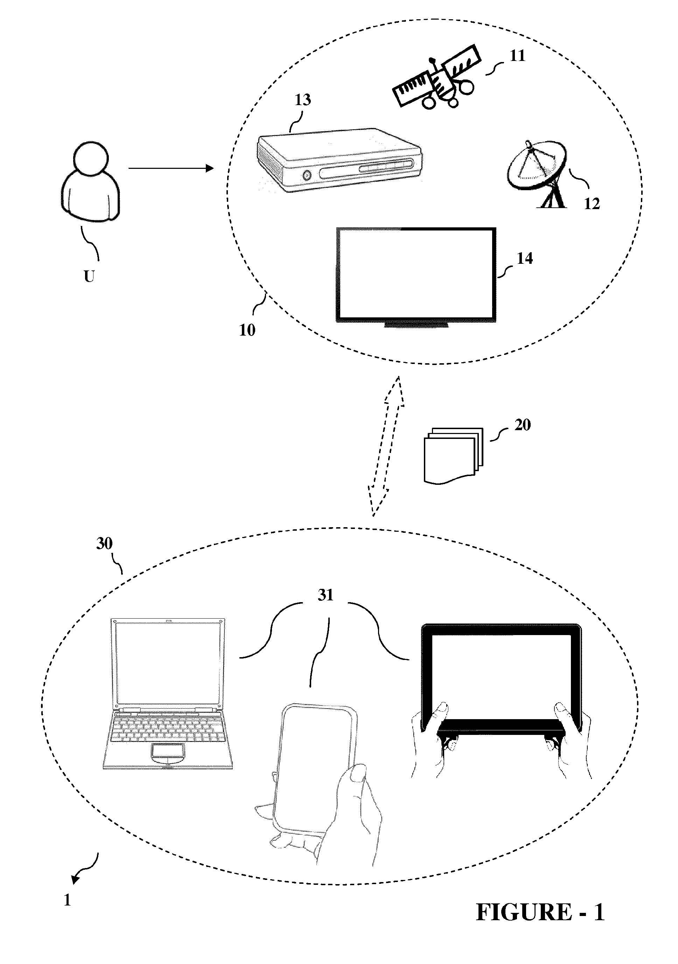

**Figure 1** **-** Schematic block diagram of the system for transmitting the conditional access authority to the live broadcast contents that can be watched via private membership between DVB-S digital video broadcast transmission medium and OTT broadcast transmission mediums

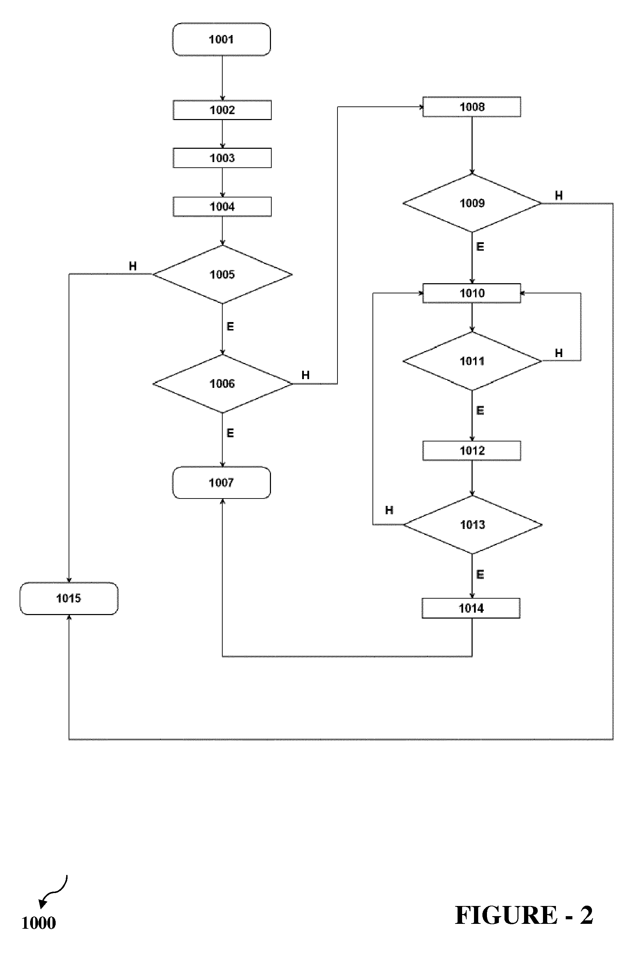

**Figure 2** **-** Flow chart of the method for transmitting the conditional access authority to the live broadcast contents that can be watched via private membership from DVB-S digital video broadcast transmission medium to OTT broadcast transmission mediums
**Figure 3** **-** Flow chart of the method for assigning operation entry to the conditional access system database by broadcaster data system signal server
**Figure 4** **-** Flow chart of the method for transmitting the conditional access authority to the live broadcast contents that can be watched via private membership from OTT broadcast transmission medium to DVB-S digital video broadcast transmission mediums **Figure 5** **-** Flow chart of the method for extending the time for broadcast blackout
**Figure 6** **-** Schematic block diagram of the system for transmitting the conditional access authority to the live broadcast contents that can be watched via private membership from OTT broadcast transmission medium to DVB-S digital video broadcast transmission medium
**Figure 7** **-** Schematic view of the query display of user verification code for OTT broadcast transmission medium
**Figure 8** **-** Schematic view of displaying the live broadcast content that can be watched via private membership in OTT broadcast transmission medium
**Figure 9** **-** Schematic view of the query display of user verification code for DVB-S digital video broadcast transmission medium
**Figure 10** **-** Schematic view of displaying the live broadcast content that can be watched via private membership in DVB-S digital video broadcast transmission medium

The parts in the figures have been enumerated and the equivalents of said numbers are given below.

### Description of the Part References

1. The system for transmitting the conditional access authority between DVB-S digital video broadcast transmission medium and OTT broadcast transmission mediums
10. DVB-S digital video broadcast transmission medium
11. Satellite
12. Dish antenna
13. Set-top device
14. Television
20. Conditional access authority
21. Verification code
30. OTT broadcast transmission medium
31. Online terminal
32. Application
40. Broadcaster data system
41. Broadcaster data system signal server
42. Broadcaster data system user database
43. Broadcaster data system membership management server
50. Conditional access system (CAS)
51. Conditional access system database
60. Live broadcast content that can be watched via private membership
1000. Method for transmitting the conditional access authority to the live broadcast contents that can be watched via private membership from DVB-S digital video broadcast transmission medium to OTT broadcast transmission medium
1001. Logging in to the application via user name and password by the user
1002. Listing the live broadcast contents that can be watched via private membership in online terminal
1003. Selecting the live broadcast content desired to be watched from the list
1004. Issuing a command of "watch live" to the broadcaster data system for the live broadcast content selected by the user
1005. Making the query that whether the user (U) is authorized to watch the live broadcast content by the broadcaster data system
1006. Making the query that whether broadcast blackout has been performed before by broadcaster data system membership management server
1007. Displaying the live broadcast content that can be watched via private membership in OTT broadcast transmission medium
1008. If broadcast blackout has not been performed before, informing the user (U) that broadcast blackout will be performed
1009. Making the query that whether broadcast blackout process will becontinued , to the user (U)
1010. Sending verification code to the mobile phone of the user (U), which is registered in the broadcaster data system user database
1011. Making the query that whether the verification code is sent to the user (U)
1012. Entering the verification code to the verification code query display in the online terminal by the user (U)
1013. Making the query that whether the verification code is confirmed
1014. Assigning operation entry to the conditional access system database by broadcaster data system signal server
1015. Informing the user (U) of the related error message and logging out from the application
2000. The method of assigning operation entry to the conditional access system database by broadcaster data system signal server
2001. Sending the operation command and related data of the user (U) to the conditional access system database by broadcaster data system signal server
2002. Making the task query to the conditional access system database by conditional access system
2003. Informing the conditional access system of the tasks by the conditional access system database
2004. Forming the related EMMs by conditional access system
2005. Sending the related EMMs to the satellite
2006. Set-top devices receiving the related EMMs through satellite and dish antenna
3000. Method for transmitting the conditional access authority to the live broadcast contents that can be watched via private membership from OTT broadcast transmission medium to DVB-S digital video broadcast transmission medium
3001. Issuing the operation command for transmitting the live broadcast content that can be watched via private membership in online terminal provided in OTT broadcast transmission medium, to the television
3002. Assigning operation entry to the conditional access system database by broadcaster data system signal server
3003. Making the query that whether cancelling the broadcast blackout is successful by the broadcaster data system
3004. Giving information in the online terminal about the requirement of stopping the broadcast in order to send the code when code query display is shown on the television
3005. Making the query that whether live broadcast is stopped in online terminal
3006. Sending the data of stopping the live broadcast in online terminal to the broadcaster data system
3007. Sending verification code to the mobile phone of the user (U), which is registered in the broadcaster data system user database, by broadcaster data system
3008. Sending the authority of conditional access and verification code to the set-top device by conditional access system
3009. Making the query that whether sending the authority of conditional access and verification code is successful
3010. Showing the verification code query display on the television screen
3011. Entering the verification code sent to the online terminal, to the verification code query display shown on the television screen
3012. Making the query that whether the verification code is true by set-top device
3013. Displaying the live broadcast content that can be watched via private membership in DVB-S digital video broadcast transmission medium
3014. Informing the user (U) of the related error message
3015. Continuing to watch the live broadcast content that can be watched via private membership through online terminal
4000. The method of extending the time for broadcast blackout
4001. Issuing the command of "watch live" for the live broadcast content that can be watched via private membership by the user (U)
4002. Assigning entry to the broadcaster data system user database
4003. Issuing the command of "watch live" for a different live broadcast content that can be watched via private membership by the user (U)
4004. Broadcaster data system signal server controlling its own entries
4005. Making the query that whether the time of the live broadcast content selected previously includes the time of the live broadcast content selected later
4006. Confirming the demand of the user (U) and extending the time for broadcast blackout
4007. Making user (U) verification again for the total time
4008. Sending verification code to the mobile phone of the user (U), which is registered in the broadcaster data system user database
4009. Making the query that whether the verification code is sent to the user (U)
4010. Entering the verification code to the query display by the user (U)
4011. Making the query that whether the verification code is confirmed
4012. Assigning operation entry to the conditional access system database by broadcaster data system signal server
U = User
CAS = Conditional Access System
EMM = Entitlement Management Message
ECM = Entitlement Control Message
DVB = Digital Video Broadcasting

### Detailed Description of the Invention

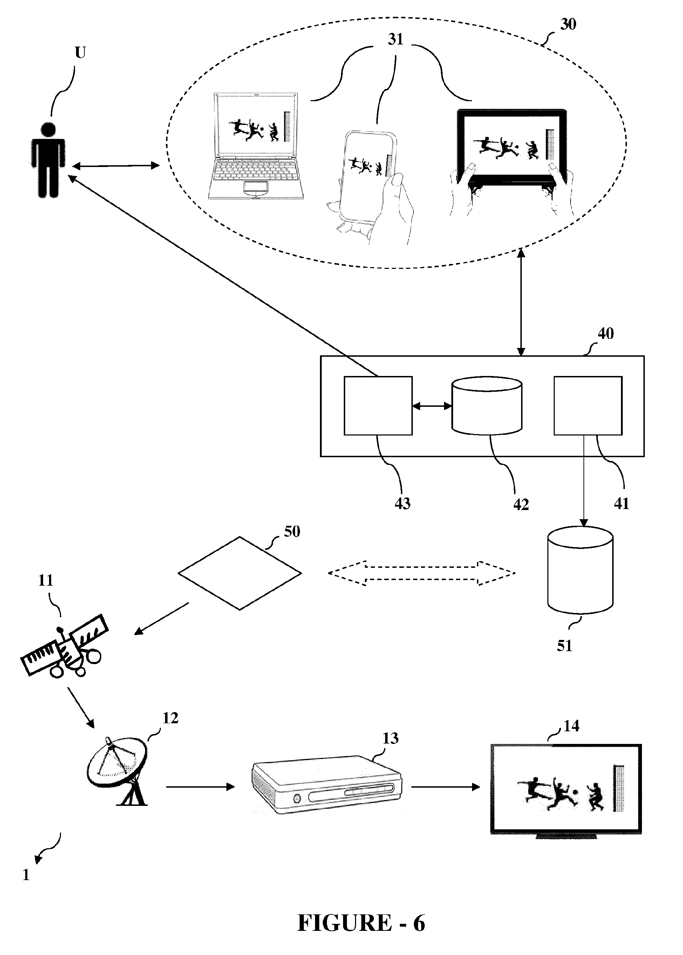

The system (1) for transmitting the conditional access authorities (20) of the users (U) to the live broadcast contents (60) that can be watched via private membership between DVB-S digital video broadcast transmission medium (10) and OTT broadcast transmission mediums (10) comprises;
- At least one DVB-S digital video broadcast transmission medium (10) that enables the transmission of interactive systems besides television and radio,
- At least one satellite (11) that receives signals from the earth and sends the same back to the earth so as to cover a wider area,
- At least one dish antenna (12) that receives signals transmitted from the satellite (11),
- At least one set-top device (13) transforming the contents received from the satellite (11) into images,
- At least one television (14) displaying the contents transformed by set-top device (13),
- Conditional access authority (20) that enables to watch the live broadcast contents (60) that can be watched via private membership,
- Numerical verification code (21) registered in the broadcaster data system user database (42) used in order to guarantee that the operation is performed by the right holder,
- At least one OTT broadcast transmission medium (30) that enables the transmission of video contents to the online terminals (31) of the end users through internet independent of the television (14),
- At least one online terminal (31) that enables to watch the live broadcast contents (60) that can be watched via private membership, independent of the television (14),
- At least one application (32) playing the live broadcast contents (60) that can be watched via private membership through online terminals (31),
- At least one broadcaster data system (40) where several data such as the subscription package of the user (U) when the user subscribes to any subscription package, the content of the package, subscription period, and the features of the set-top device (13) provided to the user (U), are recorded and stored,
- At least one broadcaster data system signal server (41) sending the operation command of the user (U) to the conditional access system database (51) in order to be received by the set-top device (13) through the satellite (11),
- At least one broadcaster data system user database (42) where the data of the user (U) is queried,
- At least one broadcaster data system membership management server (43) controlling whether the user (U) has performed broadcast blackout before,
- At least one conditional access system (50) encoding the contents and/or decoding the encoded contents,
- At least one conditional access system database (51) where the tasks sent to the conditional access system (50) are stored,
- At least one live broadcast content (60) that can be watched via private membership and transferred via different broadcast transmission mediums. (Figure 6)

During transmitting the conditional access authorities (20) of the users (U) to the live broadcast contents (60) that can be watched via private membership from DVB-S digital video broadcast transmission medium (10) to OTT broadcast transmission medium (30), the user (U) logs in the application (32) on the online terminal (31) via user name and password. After the user log in is confirmed, the live broadcast contents (60) that can be watched via private membership are listed in online terminal (31).

The user (U) selects the content (60), which s/he desires to watch live, from the list and the operation command of the user (U) in relation to the content (60) selected is sent to the broadcaster data system (40) from the online terminal (31). The broadcaster data system (40) controls whether the user (U) has the conditional access authority (20) to the live broadcast content (60) that can be watched via private membership, which the user selects. If the user (U) has conditional access authority (20), the broadcaster data system (40) controls whether broadcast blackout has been performed before.

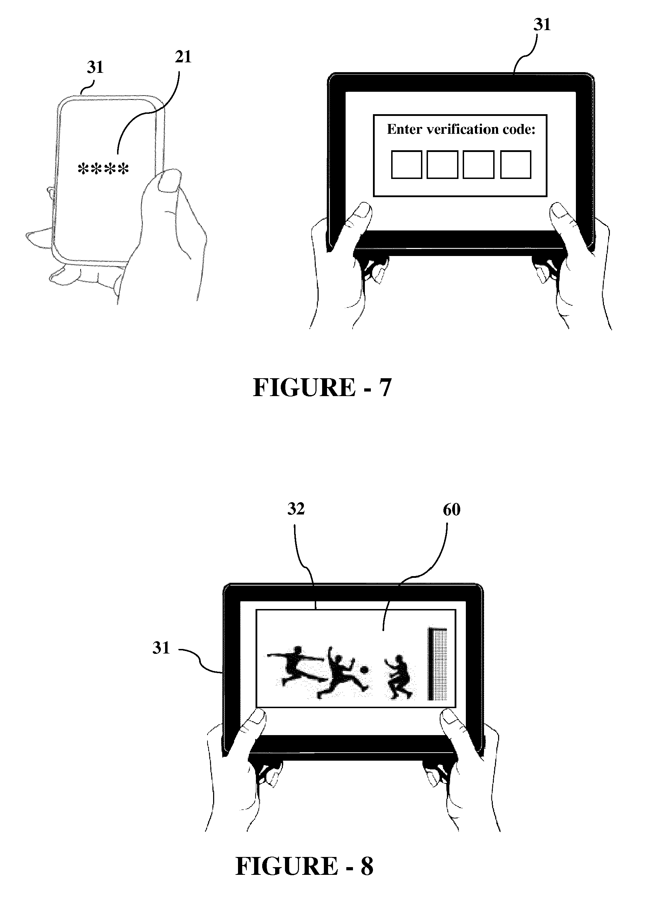

If broadcast blackout has not been performed before, the user (U) is informed that while s/he is watching the live broadcast content (60) that can be watched via private membership, which the user selects, by means of online terminal (31), the live broadcast (60) in the DVB-S digital video broadcast transmission medium (10) will be closed during the broadcast, and if s/he confirms said condition, a verification code (21) will be sent to the mobile phone registered in the broadcaster data system (40). If the user (U) confirms said condition, a verification code (21) is sent to the mobile phone number registered in the broadcaster data system (40) as SMS. The verification code (21) sent is a numerical code and the user (U) is asked for entering the verification code (21) to the verification code (21) query display in the online terminal (31). (Figure 7)

After the user verification is performed, the broadcast blackout operation command and related data of the user (U) are sent to the conditional access system database (51) by broadcaster data system signal server (41) and broadcast blackout entry is assigned to the conditional access system database (51).

If broadcast blackout has been performed before, live broadcast content (60) that can be watched via private membership is transmitted to OTT broadcast transmission medium (30) from DVB-S digital video broadcast transmission medium (10) and live broadcast content (60) that can be watched via private membership is opened for the user (U) through online terminals (31). (Figure 8)

A method for transmitting the conditional access authority (20) of the users (U) to the live broadcast contents (60) that can be watched via private membership from DVB-S digital video broadcast transmission medium (10) to OTT broadcast transmission medium (30) (1000) in the system (1) of transmitting the conditional access authority (20) between DVB-S digital video broadcast transmission medium (10) and OTT broadcast transmission mediums (30) comprises the following process steps;
- Logging in to the application (32) via user name and password by the user (U) (1001),
- Listing the live broadcast contents (60) that can be watched via private membership in online terminal (31) (1002),
- Selecting the live broadcast content (60) desired to be watched from the list (1003),
- Issuing a command of "watch live" to the broadcaster data system (40) for the live broadcast content (60) selected by the user (U) (1004),
- Making the query that whether the user (U) is authorized to watch the live broadcast content (60) by the broadcaster data system (40) (1005),
- Making the query that whether broadcast blackout has been performed before by broadcaster data system membership management server (43) (1006),
- Displaying the live broadcast content (60) that can be watched via private membership in OTT broadcast transmission medium (30) (1007),
- If broadcast blackout has not been performed before, informing the user (U) that broadcast blackout will be performed (1008),
- Making the query that whether broadcast blackout process will becontinued , to the user (U) (1009),
- Sending verification code (21) to the mobile phone of the user (U), which is registered in the broadcaster data system user database (42) (1010),
- Making the query that whether the verification code (21) is sent to the user (U) (1011),
- Entering the verification code (21) to the verification code (21) query display in the online terminal (31) by the user (U) (1012),
- Making the query that whether the verification code (21) is confirmed (1013),
- Assigning operation entry to the conditional access system database (51) by broadcaster data system signal server (41) (1014),
- Informing the user (U) of the related error message and logging out from the application (32) (1015).
(Figure 2)

After the broadcast blackout entry is assigned to the conditional access system database (51) by broadcaster data system signal server (41), conditional access system (50) makes operation query in the conditional access system database (51) for a period with time variable t in order to learn whether a task is sent thereto. If there is a task (operation command) sent thereto, the conditional access system database (51) informs the conditional access system (50) of this task.

The conditional access system (50) encodes the data that must be encoded and at the same time, adds entitlement control message (ECM) and entitlement management message (EMM). Said data are also called license control and management data. Said two messages control the conditional access authorities (20) of the personal users or user groups to the encoded broadcasts, namely, the live broadcast contents (60) that can be watched via private membership.

Entitlement Control Message (ECM) is an encoded message comprising Control Word (CW) and access criteria. The received ECM is decoded and the access criteria thereof and the access criteria at the other side are compared. Therefore, if the receiver is an authorized receiver, the Control Word (CW) therein is released. Control Word (CW) is a code for the encoding algorithm used for deciphering the received and encoded broadcast. Entitlement management messages (EMM) are the codes used for processes such as interfering in the subscription data of the members, sending conditional access authority (20) to the cards included in the set-top devices (13), shifting the set-top devices (13) to the stand-by mode or restarting the same.

After the conditional access system (50) forms the related entitlement management messages (EMM), it sends the same as a signal to the satellite (11). The set-top devices (13) draws said signal sent to the satellite (11), to themselves by means of dish antenna (12) and the users (U) transmit the live broadcast contents (60) that can be watched via private membership, from DVB-S digital video broadcast transmission medium (10) to OTT broadcast transmission medium (30). Therefore, the live broadcast (60) that can be watched via private membership is shut down in DVB-S digital video broadcast transmission medium (10) and opened in OTT broadcast transmission medium (30).

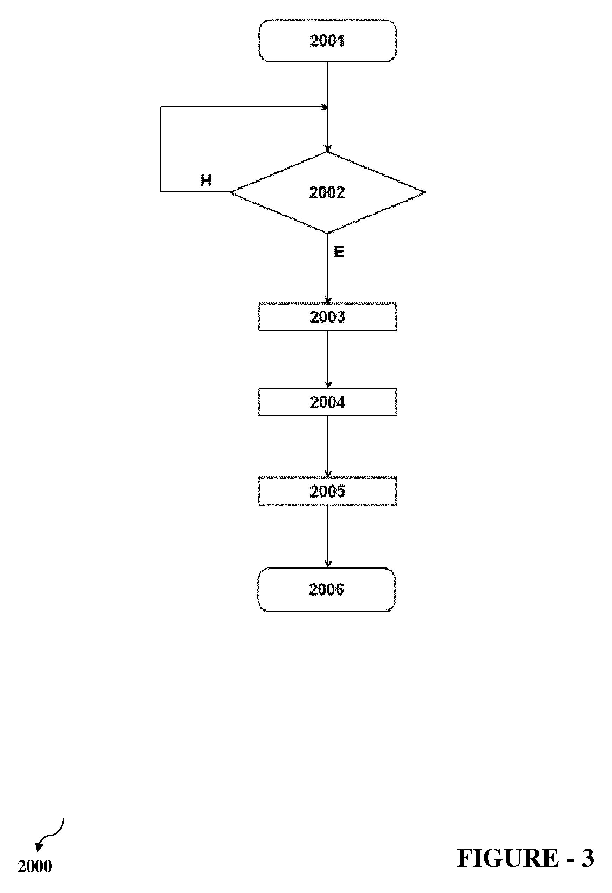

A method used for assigning operation entry to the conditional access system database (51) by broadcaster data system signal server (41) after user verification is made in the broadcast transmission system (1) (2000) comprises the following process steps;
- Sending the operation command and related data of the user (U) to the conditional access system database (51) by broadcaster data system signal server (41) (2001),
- Making the task query to the conditional access system database (51) by conditional access system (50) (2002),
- Informing the conditional access system (50) of the tasks by the conditional access system database (51) (2003),
- Forming the related EMMs by conditional access system (50) (2004),
- Sending the related EMMs to the satellite (11) (2005),
- Sending the related EMMs to set-top devices (13) through satellite (11) and dish antenna (12) (2006). (Figure 3)

In order to transmit the conditional access authorities (20) of the users (U) to the live broadcast contents (60) that can be watched via private membership from OTT broadcast transmission medium (30) to DVB-S digital video broadcast transmission medium (10), the command "transmit to the television" provided on the application (32) operated by means of online terminals (31) such as mobile phone, smart phone, desktop-laptop-tablet computers, pocket computers, etc., is used.

Following the operation command of the user (U), the broadcast transmission demand is sent to the broadcaster data system (40) from the online terminal (31) and operation entry is assigned to the conditional access system database (51) by broadcaster data system signal server (41). The broadcaster data system (40) deletes the broadcast blackout entry assigned previously. If broadcast blackout cancellation is successful, the broadcaster data system (40) sends a private broadcast displaying command to the set-top device (13) through satellite (11). A verification code (21) is provided in said private command.

In order to guarantee that the user (U) stops the broadcast in the online terminal (31), the set-top device (13) shows a code query display on the television (14). When the code query display is shown on the television (14), the user (U) is informed that the broadcast (60) that is being watched in the online terminal (31) must be stopped.

If live broadcast (60) in the online terminal (31) is stopped, this data is sent to the broadcaster data system (40). The broadcaster data system (40) sends verification code (21) to the mobile phone of the user (U), which is registered in the broadcaster data system user database (42). If the broadcast (60) is not stopped, the verification code (21) required for code query display is not shown to the user (U) and the transmission is not performed, and the user (U) continues to watch the live broadcast contents (60) that can be watched via private membership, through online terminal (31).

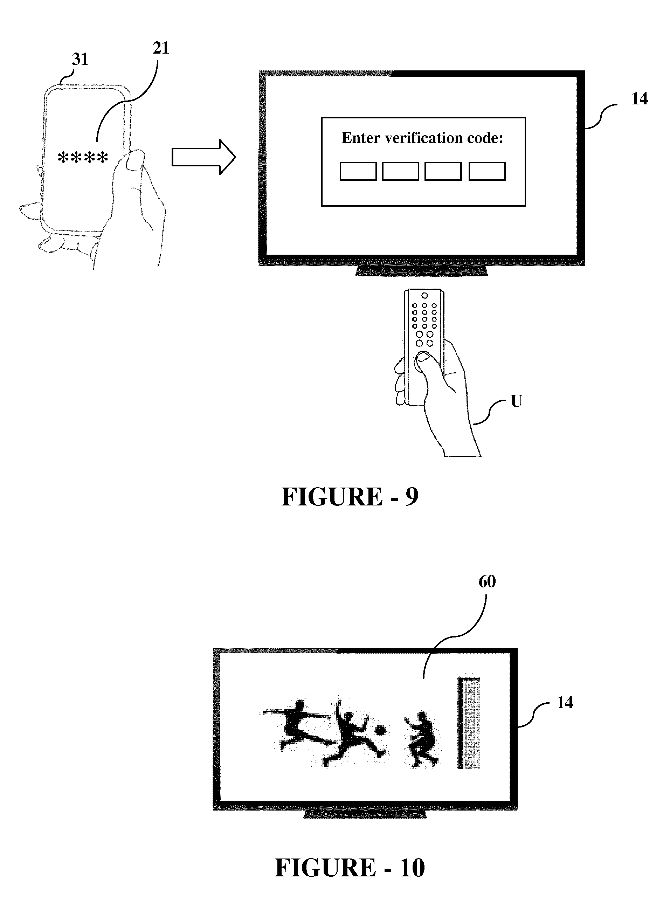

Conditional access authority (20) and verification code (21) are sent to the set-top device (13) by conditional access system (50). If conditional access authority (20) and verification code (21) are not sent, said process is performed until the transmission is achieved. Showing the query display of verification code (21) on the television (14) screen also means that the conditional access authority (20) to the live broadcast contents (60) that can be watched via private membership, namely, the broadcast signal is sent to the television (14). Said signal is a conditional signal and is required to be activated by the user (U). The user (U) is asked to enter the verification code (21) sent to the mobile phone registered in the broadcaster data system user database, to the verification code (21) query display shown on the television (14) screen. (Figure 9)

The set-top device (13) compares the verification code (21) sent thereto by conditional access system (50), and the verification code (21) entered to the query display on the television (14) by the user (U), and if the verification codes (21) are same, live broadcast content (60) that can be watched via private membership is opened in DVB-S digital video broadcast transmission medium (10). (Figure 10)

A method for transmitting the conditional access authority (20) of the users (U) to the live broadcast contents (60) that can be watched via private membership from OTT broadcast transmission medium (30) to DVB-S digital video broadcast transmission medium (10) (3000) in the system (1) of transmitting the conditional access authority (20) between DVB-S digital video broadcast transmission medium (10) and OTT broadcast transmission mediums (30) comprises the following process steps;
- Issuing the operation command for transmitting the live broadcast content (60) that can be watched via private membership in online terminal (31) provided in OTT broadcast transmission medium (30), to the television (14) by the user (U) (3001),
- Assigning operation entry to the conditional access system database (51) by broadcaster data system signal server (41) (3002),
- Making the query that whether cancelling the broadcast blackout is successful by the broadcaster data system (40) (3003),
- Giving information in the online terminal (31) about the requirement of stopping the broadcast in order to send the verification code (21), when code query display is shown on the television (14) (3004),
- Making the query that whether live broadcast (60) is stopped in online terminal (31) (3005),
- Sending the data of stopping the live broadcast (60) in online terminal (31) to the broadcaster data system (40) (3006),
- Sending verification code (21) to the mobile phone of the user (U), which is registered in the broadcaster data system user database (42), by broadcaster data system (40) (3007),
- Sending conditional access authority (20) and verification code (21) to the set-top device (13) by conditional access system (50) (3008),
- Making the query that whether sending the conditional access authority (20) and verification code (21) is successful (3009),
- Showing the verification code (21) query display on the television (14) screen (3010),
- Entering the verification code (21) sent to the online terminal (31), to the verification code (21) query display shown on the television (14) (3011),
- Making the query that whether the verification code (21) is true by set-top device (50) (3012),
- Displaying the live broadcast content (60) that can be watched via private membership in DVB-S digital video broadcast transmission medium (10) (3013),
- Informing the user (U) of the related error message (3014),

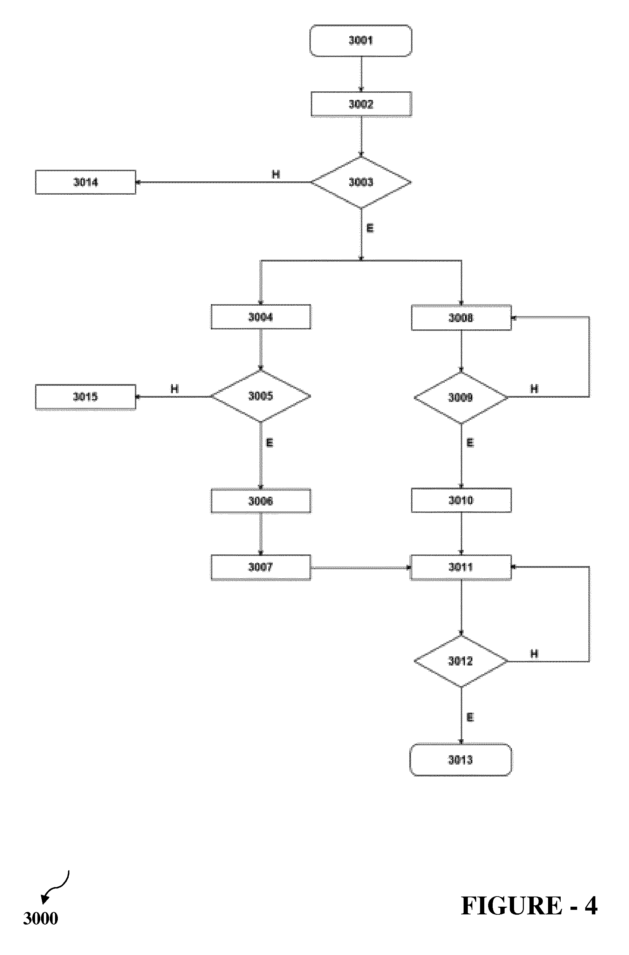

Continuing to watch the live broadcast content (60) that can be watched via private membership through online terminal (31) (3015). (Figure 4)

In the case that there are several channels that can be watched via the same conditional access authority (20), the broadcast blackout process performed for any one of said channels is performed for the other ones. When the user wants to watch the live broadcast content (60) that can be watched via private membership such as sports match, an entry is inputted into the broadcaster data system user database (42). [Example: for the time between 19:00 and 21:00]. When the user (U) wants to watch a different live broadcast content (60) that comprises the same time period and can be watched via same conditional access authority (20) with the live broadcast content (60) that can be watched via private membership, broadcaster data system signal server (41) performs a control in its own entries. If the period of the content (60) selected previously includes the period of the content (60) selected later, the content watching demand of the user (U) is confirmed directly without SMS verification.

If the time periods do not match with each other, another verification is asked from the user (U) for the remaining time. [example: After a live content (60) included between 18:00 and 20:00 is selected and when another live broadcast content (60) included between 19:00 and 21:00 is desired to be selected, the user (U) is asked to make another verification for one-hour time between 20:00 and 21:00, and after the verification is made, the broadcast blackout process is extended to the time period between 18:00 and 21:00]. When the deadline arrives for the live broadcast (60) time between the determined time periods, the live broadcast content (60) that is watched in the online terminals (31) is closed automatically due to the termination of license period and live broadcast content (60) in DVB-S digital broadcast transmission medium (10) is opened within a few minutes.

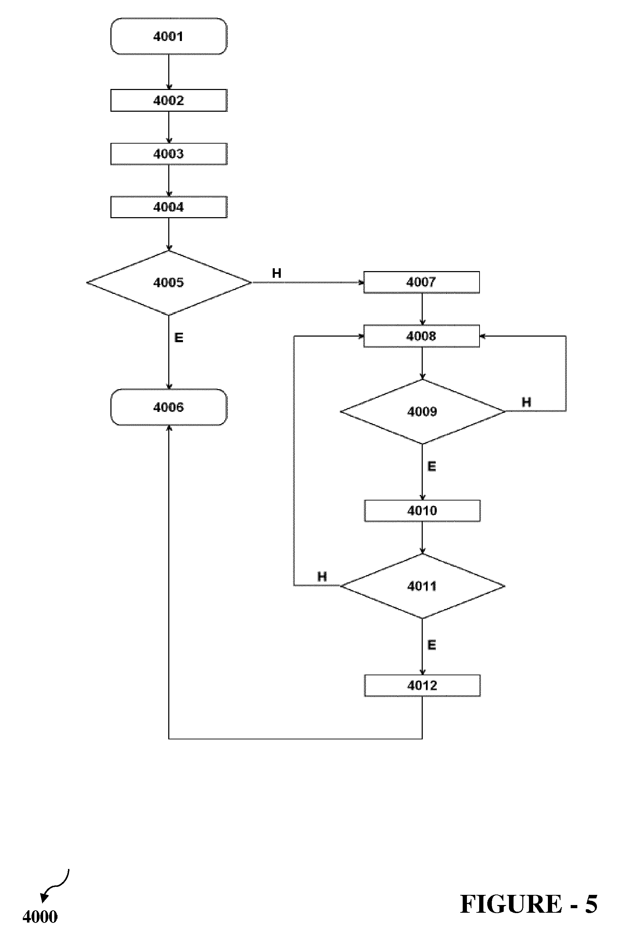

A method used for extending the broadcast blackout time in the case that the user (U) wants to switch between several live broadcast contents (60) that can be watched via same conditional access authority (4000) comprises the following process steps;
- Issuing the command of "watch live" for the live broadcast content (60) that can be watched via private membership by the user (U) (4001),
- Assigning entry to the broadcaster data system user database (42) (4002),
- Issuing the command of "watch live" for a different live broadcast content (60) that can be watched via private membership by the user (U) (4003),
- Broadcaster data system signal server (41) controlling its own entries (4004),
- Making the query that whether the time interval of the previously selected live broadcast content (60) includes the time interval of the currently selected live broadcast content (60) (4005),
- Confirming the demand of the user (U) and extending the time for broadcast blackout (4006),
- Making user (U) verification again for the total time (4007),
- Sending verification code (21) to the mobile phone of the user (U), which is registered in the broadcaster data system user database (42) (4008),
- Making the query that whether the verification code (21) is sent to the user (U) (4009),
- Entering the verification code (21) to the verification code (21) query display by the user (U) (4010),
- Making the query that whether the verification code (21) is confirmed (4011),
- Assigning operation entry to the conditional access system database (51) by broadcaster data system signal server (41) (4012). (Figure 5)

In line with the abovementioned main terms, many different applications of the method and system (1) for transmitting the conditional access authorities (20) of the users (U) to the live broadcast contents (60) that can be watched via private membership between DVB-S digital video broadcast transmission medium and OTT broadcast transmission mediums according to the present invention can be developed and the invention cannot be limited with the examples described herein; the present invention is as described in the claims basically.

## Claims

1. A method for transmitting the conditional access authority (20) of the users (U) to the live broadcast contents (60) that can be watched via private membership from OTT broadcast transmission medium (30) to DVB-S digital video broadcast transmission medium (10) (3000), **characterized in** comprising the following process steps;
- Issuing the operation command for transmitting the live broadcast content (60) that can be watched via private membership in online terminal (31) provided in OTT broadcast transmission medium (30), to the television (14) by the user (U) (3001),
- Assigning operation entry to the conditional access system database (51) by broadcaster data system signal server (41) (3002),
- Making the query that whether cancelling the broadcast blackout is successful by the broadcaster data system (40) (3003),
- Giving information in the online terminal (31) about the requirement of stopping the broadcast in order to send the verification code (21), when code query display is shown on the television (14) (3004),
- Making the query that whether live broadcast (60) is stopped in online terminal (31) (3005),
- Sending the data of stopping the live broadcast (60) in online terminal (31) to the broadcaster data system (40) (3006),
- Sending verification code (21) to the mobile phone of the user (U), which is registered in the broadcaster data system user database (42), by broadcaster data system (40) (3007),
- Sending conditional access authority (20) and verification code to the set-top device (13) by conditional access system (50) (3008),
- Making the query that whether sending the conditional access authority (20) and verification code (21) is successful (3009),
- Showing the verification code (21) query display on the television (14) screen (3010),
- Entering the verification code (21) sent to the online terminal (31), to the verification code (21) query display shown on the television (14) screen (3011),
- Making the query that whether the verification code (21) is true by set-top device (50) (3012),
- Displaying the live broadcast content (60) that can be watched via private membership in DVB-S digital video broadcast transmission medium (10) (3013),
- Informing the user (U) of the related error message (3014),
- Continuing to watch the live broadcast content (60) that can be watched via private membership through online terminal (31) (3015).

2. The process step according to Claim 1, **characterized in that** the operation command disclosed in the process step of assigning operation entry to the conditional access system database (51) by broadcaster data system signal server (41) (3002) is broadcast blackout cancellation.

3. The process step according to Claim 1, **characterized in that** if broadcast blackout is not successful in the process step of making the query that whether cancelling the broadcast blackout is successful by the broadcaster data system (40) (3003), the related error message is informed to the user (U) (3014).

4. A method for transmitting the conditional access authority (20) of the users (U) to the live broadcast contents (60) that can be watched via private membership from DVB-S digital transmission medium (10) to OTT broadcast transmission medium (30) (1000), **characterized in** comprising the following process steps;
- Logging in to the application (32) via user name and password by the user (U) (1001),
- Listing the live broadcast contents (60) that can be watched via private membership in online terminal (31) (1002),
- Selecting the live broadcast content (60) desired to be watched from the list (1003),
- Issuing a command of "watch live" to the broadcaster data system (40) for the live broadcast content (60) selected by the user (U), (1004)
- Making the query that whether the user (U) is authorized to watch the live broadcast content (60) by the broadcaster data system (40) (1005),
- Making the query that whether broadcast blackout has been performed before by broadcaster data system membership management server (43) (1006),
- Displaying the live broadcast content (60) that can be watched via private membership in OTT broadcast transmission medium (30) (1007),
- If broadcast blackout has not been performed before, informing the user (U) that broadcast blackout will be performed (1008),
- Making the query that whether broadcast blackout process will be continued, to the user (U) (1009),
- Sending verification code (21) to the mobile phone of the user (U), which is registered in the broadcaster data system user database (42) (1010),
- Making the query that whether the verification code (21) is sent to the user (U) (1011),
- Entering the verification code (21) to the verification code (21) query display in the online terminal (31) by the user (U) (1012),
- Making the query that whether the verification code (21) is confirmed (1013),
- Assigning operation entry to the conditional access system database (51) by broadcaster data system signal server (41) (1014),
- Informing the user (U) of the related error message and logging out from the application (32) (1015).

5. The process step according to Claim 4, **characterized in that** the operation command disclosed in the process step of assigning operation entry to the conditional access system database (51) by broadcaster data system signal server (41) (1014) is broadcast blackout.

6. A method used for extending the broadcast blackout time in the case that the user (U) wants to switch between several live broadcast contents (60) that can be watched via same conditional access authority (4000) according to Claims 1 to 5, **characterized in** comprising the following process steps;
- Issuing the command of "watch live" for the live broadcast content (60) that can be watched via private membership by the user (U) (4001),
- Assigning entry to the broadcaster data system user database (42) (4002),
- Issuing the command of "watch live" for a different live broadcast content (60) that can be watched via private membership by the user (U) (4003),
- Broadcaster data system signal server (41) controlling its own entries (4004),
- Making the query that whether the time interval of the previously selected live broadcast content (60) includes the time interval of the currently selected live broadcast content (60) (4005),
- Confirming the broadcast watching demand of the user (U) and extending the time for broadcast blackout (4006),
- Making user (U) verification again for the total time (4007),
- Sending verification code (21) to the mobile phone of the user (U), which is registered in the broadcaster data system user database (42) (4008),
- Making the query that whether the verification code (21) is sent to the user (U) (4009),
- Entering the verification code (21) to the verification code (21) query display by the user (U) (4010),
- Making the query that whether the verification code (21) is confirmed (4011),
- Assigning operation entry to the conditional access system database (51) by broadcaster data system signal server (41) (4012).

7. The process step according to Claim 6, **characterized in that** in the case that there are several channels that can be watched via the same conditional access authority (20), the broadcast blackout process performed for any one of said channels is performed for the other ones.

8. A method used for assigning operation entry to the conditional access system database (51) by broadcaster data system signal server (41) (2000) according to Claims 1 to 7, **characterized in** comprising the following process steps;
- Sending the operation command and related data of the user (U) to the conditional access system database (51) by broadcaster data system signal server (41) (2001),
- Making the task query to the conditional access system database (51) by conditional access system (50) (2002),
- Informing the conditional access system (50) of the tasks by the conditional access system database (51) (2003),
- Forming the related EMMs by conditional access system (50) (2004),
- Sending the related EMMs to the satellite (11) (2005),
- Sending the related EMMs to set-top devices (13) through satellite (11) and dish antenna (12) (2006),

9. The process step according to Claim 8, **characterized in that** task query is made again after the period with time variable tis over in the case that task is not notified in the process step of making the task query to the conditional access system database (51) by conditional access system (50) (2002).

10. A system (1) used in the system (1) of transmitting the conditional access authorities (20) of the users (U) to the live broadcast contents (60) that can be watched via private membership between DVB-S digital video broadcast transmission medium (10) and OTT broadcast transmission mediums, **characterized in** comprising the following;
- At least one DVB-S digital video broadcast transmission medium (10) that enables the transmission of interactive systems besides television and radio,
- At least one satellite (11) that receives signals from the earth and sends the same back to the earth so as to cover a wider area,
- At least one dish antenna (12) that receives signals transmitted from the satellite (11),
- At least one set-top device (13) transforming the contents (60) received from the satellite (11) into images,
- At least one television (14) displaying the contents transformed by set-top device (13),
- Conditional access authority (20) that enables to watch the live broadcast contents (60) that can be watched via private membership,
- Numerical verification code (21) registered in the broadcaster data system user database (42) used in order to guarantee that the operation is performed by the right holder,
- At least one OTT broadcast transmission medium (30) that enables the transmission of video contents to the online terminals (31) of the end users through internet independent of the television (14),
- At least one online terminal (31) that enables to watch the broadcast contents (60) that can be watched via private membership, independent of the television (14),
- At least one application (32) playing the live broadcast contents (60) that can be watched via private membership through online terminals (31),
- At least one broadcaster data system (40) where several data such as the subscription package of the user (U) when the user subscribes to any subscription package, the content of the package, subscription period, and the features of the set-top device (13) provided to the user (U), are recorded and stored,
- At least one broadcaster data system signal server (41) sending the operation command of the user (U) to the conditional access system database (51) in order to be received by the set-top device (13) through the satellite (11),
- At least one broadcaster data system user database (42) where the data of the user (U) is queried,
- At least one broadcaster data system membership management server (43) controlling whether the user (U) has performed broadcast blackout before,
- At least one conditional access system (50) encoding the contents and/or decoding the encoded contents,
- At least one conditional access system database (51) where the tasks sent to the conditional access system (50) are stored,
- At least one live broadcast content (60) that can be watched via private membership and transferred via different broadcast transmission mediums.

11. A method according to any one of the preceding Claims, **characterized in** comprising online terminal (31) that can be connected to the internet.

12. The system (1) according to Claim 11, **characterized in** comprising OTT broadcast transmission medium (30) having an internet network, to which online terminals (31) are connected.
